# EUROPEAN PATENT APPLICATION

(11) **EP 4 632 033 A1**
(43) Date of publication of application: **15.10.2025**
(21) Application number: 25170194.2
(22) Date of filing: 11.04.2025
(51) Int. Cl.: C09K 8/035, C09K 8/54

(54) **CORROSION INHIBITOR AND RELATED METHODS OF INHIBITING THE CORROSION OF METAL SURFACES**

(30) Priority: 12.04.2024 US 202418633631
(71) Applicant: Services Pétroliers Schlumberger, 75007 Paris (FR); Schlumberger Technology B.V., 2514 JG The Hague (NL)
(72) Inventor: BARMATOV, Evgeny Borisovich, Cambridge, CB3 0EL (GB); HUGHES, Trevor Lloyd, Cambridge, CB3 0EL (GB)
(74) Representative: Schlumberger Intellectual Property Department

(57) **Abstract**

A corrosion inhibitor composition and a method of inhibiting corrosion on a surface (e.g., steel surface) are disclosed. The corrosion inhibitor composition includes a precursor that is a reaction product of 3-hydroxypropion aldehyde and at least one aliphatic component.

## Description

### FIELD

The present disclosure relates to corrosion inhibiting compositions and related methods of inhibiting the corrosion of metal surfaces by acidic liquids.

### BACKGROUND

Subterranean hydrocarbon containing formations penetrated by well bores are often treated with acidic liquids to stimulate the production of hydrocarbons therefrom. One such treatment generally referred to as "acidizing" or "matrix acidizing" involves the introduction of an acidic liquid into a subterranean formation under pressure so that the acidic liquid flows through the pore spaces of the formation. The acidic liquid reacts with acid soluble materials contained in the formation thereby increasing the size of the pore spaces and increasing the permeability of the formation. Another production stimulation treatment known as "fracture-acidizing" involves the formation of one or more fractures in the formation and the introduction of an acidic liquid into the fractures to etch the fracture faces whereby channels are formed therein when the fractures close. The acidic liquid also enlarges the pore spaces in the fracture faces and in the formation.

Acidizing and fracture-acidizing solutions typically contain, for example, 15% to 28% hydrochloric acid which causes corrosion of metal surfaces in pumps, tubular goods and equipment used to introduce the aqueous acid solutions into the subterranean formations to be treated. The expense associated with repairing or replacing corrosion damaged tubular goods and equipment can be very high. The corrosion of tubular goods and down-hole equipment is increased by the elevated temperatures encountered in deep formations, and the corrosion results in at least the partial neutralization of the acid before it reacts with acid-soluble materials in the formations.

Oilfield production systems commonly include steel and alloy surfaces that are exposed to acidic fluids associated with co-produced carbon dioxide and/or hydrogen sulfide. Such acidic fluids can cause corrosion of the steel and alloy surfaces.

Acidic fluids are also common in a variety of other industrial applications, such as carbon dioxide pumping services where steel and alloy surfaces are exposed to acidic fluids associated with injected carbon dioxide. In such applications, metal surfaces are necessarily contacted with the acidic fluids and any corrosion of the metal surfaces is highly undesirable. In addition, other corrosive fluids such as aqueous alkaline solutions, heavy brines, petroleum streams containing acidic materials and the like are commonly transported through and corrode metal surfaces in tubular goods, pipelines and pumping equipment.

A conventional approach to the protection of steel against corrosion by an acidic liquid is to contact the steel with a corrosion inhibitor. For example, when conveying an acidic liquid through steel tubing, it is conventional to add a corrosion inhibitor to the flow of liquid as mentioned in many documents including, for example, US Patent No. 5120471.

Organic film forming corrosion inhibitors are a key component of commercial acid inhibitor formulations used to inhibit the corrosion of carbon steel and high alloys in strong mineral acids. See M. Finšgar, J. Jackson, "Application of corrosion inhibitors for steels in acidic media for the oil and gas industry: A review," Corrosion Science 86 (2014) 17-41; and E. Barmatov, J. Geddes, T. Hughes, M. Nagl, "Research on corrosion inhibitors for acid stimulation," NACE, 2012, pp. C2012-0001573. For example, commercial acid inhibitor formulations frequently contains acetylenic alcohols, an alkenyl ketone or alkenyl aldehyde containing an olefinic double bond conjugated with the double bond of a keto group.

Examples of compounds containing an acetylenic group include acetylenic alcohols which are liquid at atmospheric pressure and have a structure containing at least 6 carbons atoms, and possibly from 6 or 8 to 18 carbon atoms, such as 5-methyl hex-1-yn-3-ol, 1-octyn-3-ol and 4-ethyl 1-octyn-3-ol.

An example compound containing a carbon-nitrogen triple bond (which may be termed a cyano or nitrile group) is cinnamonitrile.

Examples of alkenyl ketones are alkenyl phenones: e.g. 2-hydroxy-1-phenyl but-3-en-1-one, 3-methoxy-2-(methoxymethyl)-1-phenylpropan-1-one, 2-(methoxymethyl)-1-phenylprop-2-en-1-one, and phenylvinyl ketone.

An example of an alkenyl aldehyde is trans-cinnamaldehyde, acrolein, crotonaldehyde and 3-methyl-2-butenal.

Many commercial acid inhibitors used in well acidizing services were based on the Mannich condensation reactions. This process uses formaldehyde, an amine, and a ketone to produce a "Mannich base." Because this reaction rarely goes to completion, some toxic formaldehyde will remain in the reaction product that is formulated as the commercial inhibitor.

Good corrosion inhibition efficiencies can be obtained with so-called polymerizable corrosion inhibitors. Acetylenic alcohols, α,β-unsaturated aldehydes, and α-alkenylphenones are typical representatives of polymerizable corrosion inhibitors.

U.S. Patent No.: 5120471 describe a corrosion inhibitor composed of phenyl ketone, phenyl ketone with a quaternary salt of a nitrogen-containing heterocyclic aromatic compound with a quaternary salt of a nitrogen-containing heterocyclic aromatic compound and an acid soluble metal from antimonium or bismuth (such as Bi₂O₃, BiI₃) salts. Based on this approach, trans-cinnamaldehyde was proposed as an ingredient in low toxicity inhibitor formulations. A low-toxicity commercial inhibitor formulation based on trans-cinnamaldehyde was developed for use in HCl-base cleaning formulations as described in W.W. Frenier, paper 96154, presented at the 51st NACE International Corrosion Forum, Denver, CO, March 1996.

US Patent No. 6399547 describes the use of an aliphatic aldehydes in combination with an aromatic aldehyde, wherein the aromatic aldehyde is a substituted cinnamaldehyde.

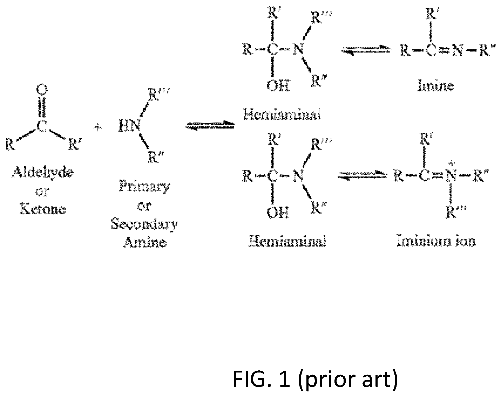

The general reaction to form imines, hemiaminals and iminium ions is shown in prior art FIG. 1.

Polymerizable corrosion inhibitors are a key component of inhibitor formulations to inhibit the corrosion of carbon steel and high alloys in strong mineral acids. However, the usage of most synthetic organic inhibitors is a problem due to their environmental unacceptability (based on three criteria, i.e. marine toxicity, bioaccumulation and biodegradation) which make them less acceptable for use in highly regulated offshore environments, such as the North Sea and Northeast Atlantic.

For example, commercial acid inhibitor formulations frequently contain acetylenic alcohols, α,β-unsaturated aldehydes, and α-alkenylphenones. While these materials produce excellent corrosion inhibitor formulations, these materials can be toxic to mammals, readily absorbed through the skin and produce toxic vapors and causing problems of handling and waste disposal. See SPE155966 and D.D.N. Singh, A.K. Dey, Corrosion 49 (1993): p. 165. Furthermore, human exposure to aldehydes also represents a significant toxicological concern as described in P.J. O'Brien, A.G. Diraki, N. Shangari, "Aldehyde sources, metabolism, molecular toxicity mechanisms, and possible effects on human health," Crit. Rev. Toxicol., 2005, 35, 609. In the paper by R.M. LoPachin, T. Gavi, "Molecular mechanisms of aldehyde toxicity: a chemical perspective," Chem. Res. Toxicol. 2014, 27, 1081, short chain aldehydes and longer chain saturated alkanals are described as hard electrophiles that cause toxicity by forming adducts with hard biological nucleophiles, e.g., primary nitrogen groups on lysine residues. The order of potency was as follows: CH₂=CHCHO (acrolein) >> CH₃CH=CHCHO (crotonaldehyde) > (CH₃)₂C=CHCHO (3-methyl-2-butenal) ≈ CH₃CH₂CHO (propanal).

Amongst the compounds in its class, acrolein is by far the strongest electrophile, shows the highest reactivity with nucleophiles, and is therefore a dangerous substance for the living cell as described in Uchida, K.; Kanematsu, M.; Morimitsu, Y.; Osawa, T.; Noguchi, N.; Niki, E, "Acrolein is a product of lipid peroxidation reaction," J. Biol. Chem. 1998, 273, 16058. The compound is a pulmonary toxicant and an irritant of mucous membranes as described in Esterbauer, H.; Schaur, R. J.; Zollner, H., "Chemistry and biochemistry of 4-hydroxynonenal, malondialdehyde and related aldehydes," Free Radic. Biol. Med. 1991, 11, 81. The compound is considered by regulatory agencies to be one of the greatest non-cancer health risks of all organic pollutants.

There remains a continuing need for improved methods and metal corrosion inhibiting compositions which provide corrosion inhibitor formulations that can meet industry standards for corrosion inhibitor performance and which have less environmental impact.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In general, the present disclosure is directed to a corrosion inhibitor composition that includes a precursor that is a reaction product of 3-hydroxypropion aldehyde and at least one aliphatic component.

In embodiments, the at least one aliphatic component can be selected from the group consisting of: a primary aliphatic amine, a secondary aliphatic amine, an aliphatic alcohol, an aliphatic diol, and combinations thereof.

In embodiments, the at least one aliphatic component can include an aliphatic alcohol having 1-12 carbon atoms, such as methanol, ethanol, or combinations thereof.

In embodiments, the at least one aliphatic component can include an aliphatic diol having 1-12 carbon atoms, such as ethylene glycol.

In embodiments, the at least one aliphatic component can include an aliphatic triol having 1-12 carbon atoms, such as glycerol.

In embodiments, the at least one aliphatic component can include one or more aliphatic primary or secondary amines.

In embodiments, the at least one aliphatic component can include one or more aliphatic primary or secondary diamines and/or triamines.

In embodiments, the at least one aliphatic component can include one or more high-molecular weight components.

In embodiments, the one or more high-molecular weight components can have a molecular weight between 500 and 10⁶ (preferably between 500 and 10000) and comprise backbones that can be either linear or ladder or cyclic or branched.

In embodiments, the one or more high-molecular weight components can include water-soluble polymers and oligomers containing terminal side groups such as hydroxyl, or primary and/or secondary amine groups.

In embodiments, the one or more high-molecular weight components can include dendrimers containing functional side groups such as hydroxyl, or primary and/or secondary amine groups, such as poly(amido amine) (PAMAM), poly(propylene imine) (PPI), or combinations thereof.

In embodiments, the one or more high-molecular weight components can include trimers containing functional side groups such as hydroxyl, and amine groups, such as 2-[bis(2-aminoethyl)amino]ethanol, thriethanolamine, or combinations thereof.

In another aspect, the present disclosure is directed to a method of inhibiting corrosion on a surface which involves contacting the surface with a corrosion inhibitor composition that includes a precursor that is a reaction product of 3-hydroxypropion aldehyde and at least one aliphatic component.

In yet another aspect, the present disclosure is directed to a method of forming a treatment fluid that is transported through a well which involvees adding a corrosion inhibitor composition that includes a precursor that is a reaction product of 3-hydroxypropion aldehyde and at least one aliphatic component to an aqueous acidic fluid. The corrosion inhibitor composition can function to inhibit corrosion of metal surfaces contacted by the treatment fluid.

In still another aspect, the present disclosure is directed to a method of inhibiting corrosion in a well that transports aqueous acidic fluid, which involves forming or providing a treatment fluid that combines a corrosion inhibitor composition that includes a precursor that is a reaction product of 3-hydroxypropion aldehyde and at least one aliphatic component and an aqueous acidic fluid. The treatment fluid can be introduced into the well. The corrosion inhibitor composition can function to inhibit corrosion of metal surfaces contacted by the treatment fluid. The well can be an oil well, a gas well, a water well, or a geothermal well.

In another aspect, the present disclosure is directed to a corrosion inhibitor composition that includes of 3-hydroxypropion aldehyde.

In embodiments, the corrosion inhibiting composition can further include products of the hydration and oligomerization of 3-hydroxypropion aldehyde in water.

In embodiments, ogligomerization of 3-hydroxypropion aldehyde can be catalyzed by acid.

In another aspect, the present disclosure is directed to a method of inhibiting corrosion on a surface which involves contacting the surface with a corrosion inhibitor composition that includes a 3-hydroxypropion aldehyde.

In yet another aspect, the present disclosure is directed to a method of forming a treatment fluid that is transported through a well which involvees adding a corrosion inhibitor composition that includes 3-hydroxypropion aldehyde to an aqueous acidic fluid. The corrosion inhibitor composition can function to inhibit corrosion of metal surfaces contacted by the treatment fluid.

In still another aspect, the present disclosure is directed to a method of inhibiting corrosion in a well that transports aqueous acidic fluid, which involves forming or providing a treatment fluid that combines a corrosion inhibitor composition that includes 3-hydroxypropion aldehyde and an aqueous acidic fluid. The treatment fluid can be introduced into the well. The corrosion inhibitor composition can function to inhibit corrosion of metal surfaces contacted by the treatment fluid. The well can be an oil well, a gas well, a water well, or a geothermal well.

### BRIEF DESCRIPTION OF THE DRAWINGS

The subject disclosure is further described in the detailed description which follows, in reference to the noted plurality of drawings by way of non-limiting examples of the subject disclosure, in which like reference numerals represent similar parts throughout the several views of the drawings, and wherein:
FIG. 1 (PRIOR ART) is a schematic diagram that illustrates corrosion inhibitor formulations that comprise a reaction product of α,β-unsaturated ketone and α,β-unsaturated aldehyde with a primary or secondary amine;
FIG. 2 is a schematic diagram that illustrates reversible dimerization and hydration of 3-HPA in an aqueous solution;
FIG. 3 is a schematic diagram that illustrations chemical reaction of 3-HPA with various aliphatic components to form one or more 3-HPA-based precursors;
FIG. 4 is a schematic diagram of the structure of a poly(amido amine) (PAMAM) dendrimer;
FIG. 5 is a schematic diagram of the structure of a poly(propylene imine) (PPI) dendrimer;
FIG. 6 is a schematic diagram of the structure of a thriethanolamine trimer;
FIG. 7 is a schematic diagram of the structure of a 2-[bis(2-aminoethyl)amino]ethanol trimer;
FIG. 8 is a schematic diagram of a reaction that synthesizes 3,3-diethoxy-1-propanol (a polymeric 3-HPA-based precursor) from 3-HPA, ethanol (EtOH) and p-toluenesulfonic acid (TosOH); and
FIG. 9 is a schematic diagram of a reaction that synthesizes a polymeric 3-HPA precursor from 3-HPA, poly(ethylenimine), and methanol (MeOH).

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

3-Hydroxypropionaldehyde (which is referred to herein as 3-HPA) was first discovered by Voisenet as set forth in Voisenet M. E. "Formation d'acrole 'ine dans la maladie de l'amertume des vins." C. R. Acad. Sci. 1910, t. 150, 1614-1616. Here, it was observed that 3-HPA formed from glycerol during bacterial spoilage of wine. WO1988008452 describes 3-HPA for use as an antibiotic under the name reuterin.

3-HPA has great potential as a precursor in the production of useful industrial chemicals, in food industry, as well as in medical applications as described in Vollenweider S, Lacroix C., 3-Hydroxypropionaldehyde: applications and perspectives of biotechnological production, Appl. Microbiol. Biotechnol. 2004, 64, 16-27. 3-HPA can be dehydrated to acrolein, oxidized to 3-hydroxypropionic acid, and reduced to 1,3-propanediol. Further, 3-HPA can be indirectly oxidized to acrylic acid with acrolein as intermediate. All these derivatives are starting materials for polymer synthesis and therefore highly interesting for the chemical industry.

3-HPA has a strong microbial activity against a whole range of microorganisms including gram-positive and gram-negative bacteria, yeasts, and molds. Biotechnologically produced HPA could be used to protect food against microbial spoilage. The anti-bacterial activity of 3-HPA has been shown to inhibit the growth of Listeria monocytogenes and Escherichia coli in meat products, milk and cottage cheese. For health care or pharmaceutical applications, 3-HPA can be a useful agent in the sterilization and fixation of biological tissues.

As mentioned above 3-HPA was discovered over 100 years ago, followed by its identification as an antimicrobe. 3-HPA can be produced biotechnologically by fermentation of glycerol-containing aqueous solution at room temperature under normal pressure. The conversion of glycerol to 3-HPA is a one-step enzymatic catalysis and the yields (up to 87%) are higher than those achieved by chemical synthesis. Today several organisms are known to transform glycerol into 3-HPA including bacteria such as Klebsiella, Citrobacter, and Lactobacilli.

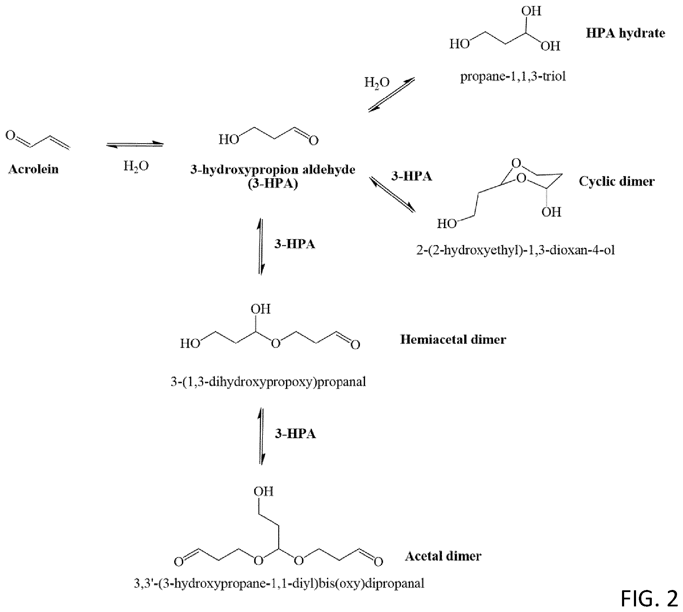

In aqueous solution, 3-HPA undergoes a reversible dimerization and hydration as described in i) Hall R. H., Stern E. S., "Acid-catalysed hydration of acrylaldehyde: Kinetics of the reaction and isolation of β-hydroxypropionaldehyde," J. Chem. Soc. 1950, 490-498, and ii) Sung H. W., Chen C.N., Liang H.F., Hong M.H., "A natural compound (reuterin) produced by Lactobacillus reuterin for biological-tissue fixation," Biomaterials 2003, 24, 1335-1347. These processes result in an equilibrium of 3-hydroxypropionaldehyde (3-HPA), propane-1,1,3-triol (HPA hydrate) formed in acidic conditions, and 2-(2-hydroxyethyl)-1,3-dioxan-4-ol (Cyclic dimer), 3-(1,3-dihydroxypropoxy)propanal (Hemiacetal dimer) and 3,3'-(3-hydroxypropane-1,1-diyl)bis(oxy)dipropanal (Acetal dimer) formed in acidic and basic conditions as illustrated in FIG. 2. Hence, the composition of the 3-HPA system is highly dynamic. However, the corrosion testing data suggest that dynamic composition of the 3-HPA system or high tendency of 3-HPA to self-condensation and hydration will not greatly affect its corrosion performance in a strong hydrochloric acid environment.

Biotechnologically produced 3-HPA and the 3-HPA derivatives, such as the cyclic dimeric form of FIG. 2 and others described herein, have a high potential as a food preservative and within health care. These data suggest that 3-HPA possesses the anti-bacterial activity but at the same time is safe for humans and animals due to its moderate acute toxicity. Furthermore, reuterin is much less toxic than acrolein and only two times more toxic than diacetyl, and generally recognized as safe flavoring compound. See Fernandez-Cruz M.L, Martín-Cabrejas I., Palacio J.P., Gaya P., Diaz-Navarro C., Navas J.M., Medina M., Arques J.L., "In vitro toxicity of reuterin, a potential food biopreservative," Food and Chemical Toxicology 96, 2016, 155-159. In contrast for acrolein, the median intraperitoneal (i.p.) lethal dose 50 (LD50) was estimated to be 7 mg/kg by weight (bw) for mice. The acute toxicity of diacetyl after i.p. exposure in rats is low (525 mg/kg bw). The i.p. LD50 for reuterin is approximately 250 mg/kg bw and indicates a moderate toxicity. The acute toxicity LD50 oral for propargyl alcohol is 20 mg/kg for rats. See Propargyl alcohol, MSDS, Aldrich-Sigma. Overall, the typical polymerizable corrosion inhibitors, i.e. acrolein and propargyl alcohol are 36 and 12 times respectively more toxic than reuterin.

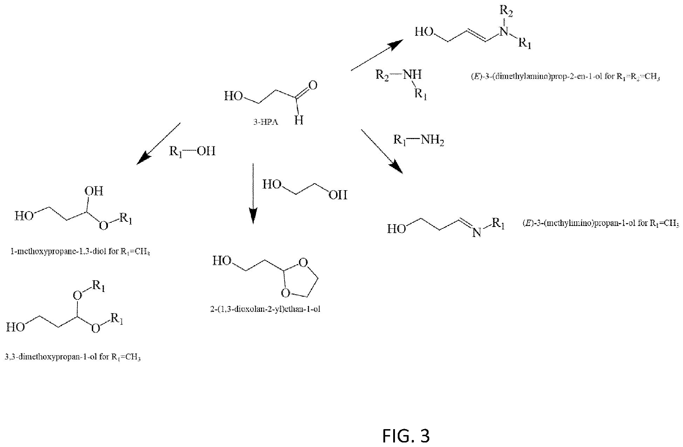

In accordance with the present disclosure, 3-HPA can be reacted with one or more aliphatic components to form a 3-HPA-based precursor. A corrosion inhibitor can be formulated using the 3-HPA-based precursor. In embodiments, the one or more aliphatic components can include primary or secondary aliphatic amines, one or more aliphatic alcohols, one or more aliphatic diols and/or one or more aliphatic triols. FIG. 3 illustrates the chemical reaction of 3-HPA with with various primary and secondary aliphatic amines, aliphatic alcohols and aliphatic diols to form various 3-HPA-based precursors. All examples of compound names are given when R=CH₃ (methyl group) and are used for illustration. Such 3-HPA-based precursors can include 3,3-diethoxy-1-propanol and 1-methoxypropane-1,3-diol that results from the reaction of 3-HPA with an alcohol, 2-(1,3-dioxolan-2-yl)ethan-1-ol that results from the reaction of 3-HPA with a diol, (E)-3-(methylimino)propan-1-ol that results from the reaction of 3-HPA with a primary aliphatic amine, and/or (E)-3-(dimethylamino)prop-2-en-1-ol that results from the reaction of 3-HPA with a secondary aliphatic amine. A corrosion inhibitor can be formulated using one or more 3-HPA-based precursors.

Amines are compounds and functional groups that contain a basic nitrogen atom with a lone pair. Amines are formally derivatives of ammonia (NH₃), wherein one or more hydrogen atoms have been replaced by a substituent such as an alkyl or aryl group, An aliphatic amine is an amine in which there is no aromatic ring directly connected to the nitrogen atom of the amine. A primary aliphatic amine is an aliphatic amine characterized by replacement of one of three hydrogen atoms in ammonia by a substituent such as an alkyl or aromatic group. A secondary aliphatic amine is an aliphatic amine characterized by replacement of two of three hydrogen atoms in ammonia by a substituent such as an alkyl or aromatic group. Alcohols are compounds and function groups that contain one or more hydroxyl (-OH) groups attached to a carbon atom of an alkyl group (hydrocarbon chain). Alcohols may be considered as organic derivatives of water (H₂O) in which one of the hydrogen atoms has been replaced by an alkyl group, typically represented by R in organic structures. An aliphatic alcohol is an alcohol whose carbons are linked to each other in a straight chain. Diols are alcohols that contain two hydroxyl groups (-OH groups). An aliphatic diol is a diol whose carbons are linked to each other in a straight chain. Triols are alcohols that contain three hydroxyl groups (-OH groups). An aliphatic triol is a triol whose carbons are linked to each other in a straight chain.

In embodiments, the 3-HPA can be reacted with an aliphatic alcohol having 1 to 2 carbon atoms to form the 3-HPA-based precursor. In embodiments, the aliphatic alcohol having 1 to 12 carbon atoms can include methanol, ethanol, or a mixture of thereof.

In embodiments, the 3-HPA can be reacted with an aliphatic diol having 1 to 12 carbon atoms to form the 3-HPA-based precursor. In embodiments, the aliphatic diol having 1 to 12 carbon atoms can include ethylene glycol.

In embodiments, the 3-HPA can be reacted with an aliphatic triol having 1 to 12 carbon atoms to form the 3-HPA-based precursor. In embodiments, the aliphatic triol having 1 to 12 carbon atoms can include glycerol.

In embodiments, the 3-HPA can be reacted with one or more aliphatic primary or secondary amines to form the 3-HPA-based precursor.

In embodiments, the 3-HPA can be reacted with one or more aliphatic primary or secondary diamines and/or triamines to form the 3-HPA-based precursor.

In other embodiments, the 3-HPA can be reacted with one or more high-molecular weight components to form the 3-HPA-based precursor. In such embodiments, the high-molecular-weight component(s) can have a molecular weight between 500 and 10⁶, preferably between 500 and 10000 and comprise backbones that can be either linear or ladder or cyclic or branched.

In embodiments, the high-molecular weight component(s) can include, but is not limited to, various water-soluble polymers and oligomers containing terminal side groups such as hydroxyl, or primary and/or secondary amine groups.

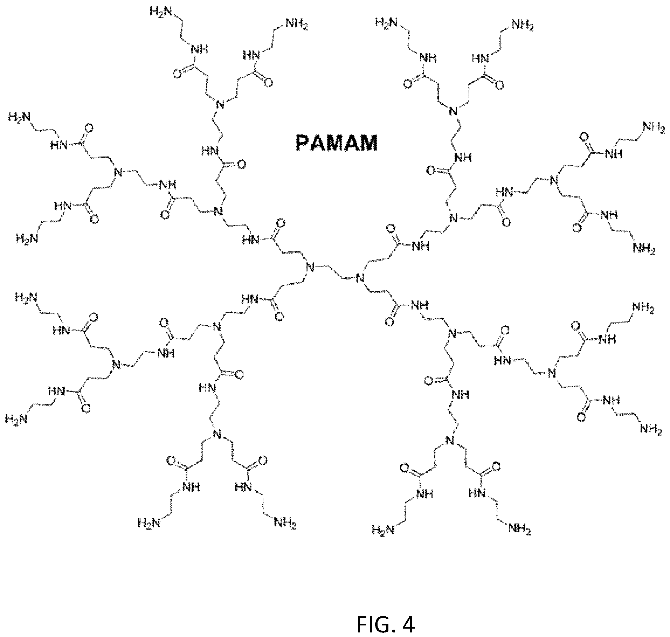

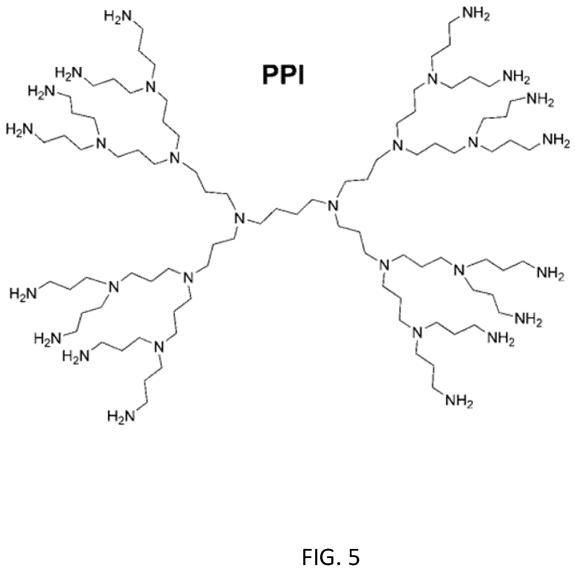

In embodiments, the high-molecular weight component(s) can include, but is not limited to, various dendrimers of different generations (G=0-10) containing functional side groups such as hydroxyl, or primary and/or secondary amine groups. The dendrimers are described in Tomalia D.A., Fre'chet J.M.J., "Discovery of dendrimers and dendritic polymers: a brief historical perspective," J. Polym. Sci. Part A: Polym. Chem. 2002, 40, 2719-2728. Dendrimers include poly(amido amine) (PAMAM) and poly(propylene imine) (PPI). The structure of the PAMAM dendrimer is shown in FIG. 4, and the structure of the PPI dendrimer is shown in FIG. 5. An advantage of these dendrimers structures is their highly controlled and generally lower molecular weight and uniform architecture.

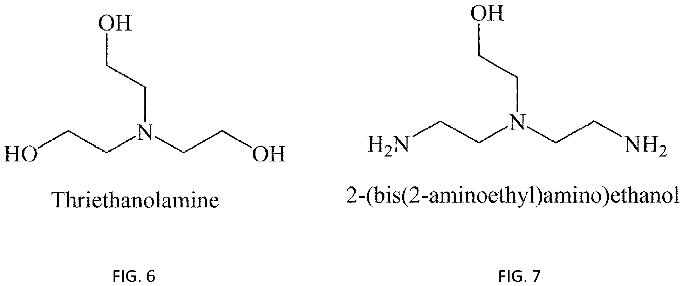

In embodiments, the high-molecular weight component(s) can include, but is not limited to, various trimers containing functional side groups such as hydroxyl, and amine groups, for example, commercially available 2-[bis(2-aminoethyl)amino]ethanol and thriethanolamine. The structure of the thriethanolamine trimer is shown in FIG. 6, and the structure of the 2-[bis(2-aminoethyl)amino]ethanol trimer is shown in FIG. 7.

In embodiments, 3-HPA can be reacted with combinations of one or more of these constituents to form the 3-HPA-based precursor.

The 3-HPA-based precursor may be prepared using any technique known in the art. For instance, as one example, the 3-HPA and other constituents as described herein may be mixed in a suitable solvent and heated as appropriate for the reaction to occur. The solvent can be evaporated to leave behind the 3-HPA-based precursor.

A corrosion inhibitor composition can be formulated using one or more 3-HPA-based precursors. In embodiments, the percentage of the 3-HPA-based precursor(s) in the corrosion inhibitor composition formed therefrom can vary over a wide range. In some embodiments, the percentage of the 3-HPA-based precursor(s) in the corrosion inhibitor composition formed therefrom can range between about 10% and about 60% by weight of the corrosion inhibitor composition.

In addition to the foregoing, the corrosion inhibition compositions of the present disclosure can include additional components. Optional additional components can include, for example, base fluids or dispersing agents (such as water or aqueous fluids), intensifiers, sources of copper ions, sources of iodide ions, aromatic hydrocarbons having high oil wetting characteristics, solvents, surfactants control agents, foaming agents, anti-sludge agents, gelling agents, clay stabilizers, viscosifiers, wetting agents, oxygen scavengers, stabilizers, scale inhibitors, salts, pH control additives, friction reducers, other biocides, sulfide scavengers, buffers, fluid-loss additives, catalysts, clay control agents, antifoam agents, flocculants, carbon dioxide scavengers, oxidizers, breakers, breaker aids, water clarifiers, asphaltene inhibitors, paraffin inhibitors, relative permeability modifiers, particulates, and the like. Such additives can broaden the utility of the corrosion inhibiting compositions, enhance the effectiveness of the compositions and/or facilitate the use thereof. In some embodiments, the corrosion inhibitor compositions of the present disclosure can be combined with one or more other corrosion inhibitors that are chemically compatible with those of the present disclosure.

The corrosion inhibitor composition may be prepared or mixed using any technique known in the art. For instance, as one example, the constituents of the corrosion inhibitor composition may be mixed simultaneously with one another.

The corrosion inhibitor composition may be employed for treatment using various techniques. In acidizing treatments, in general, an acid solution, such as an aqueous acidic solution, is employed for the acid stimulation. The treating acid solution may include, but is not limited to, hydrochloric acid, hydrofluoric acid, acetic acid, formic acid, or other organic acids and anhydrides, and mixtures thereof. In addition, these acids may be presented as aqueous acidic solutions comprising water. The treating acid may include any other acids also known to those of skill in the art.

Accordingly, the corrosion inhibitor composition may be combined with or mixed into the treating acid solution, such as the aqueous acid solution. The composition may be introduced in an amount sufficient to provide protection against or inhibit corrosion. However, it should be understood that the amount of the corrosion inhibitor composition varies depending on the system in which the ingredients are used. For instance, the concentration may depend on the temperature of the well, the exposure time to the acid solution, the type of acid, the type of formation, the depth of the formation, the type of surface, etc. Methods for monitoring corrosion are well known in the art thereby allowing one to adjust the concentration of the corrosion inhibitor composition.

The corrosion inhibitor composition may be prepared or mixed using any technique known in the art. For instance, as one example, the constituents of the corrosion inhibitor composition may be mixed simultaneously with one another.

The corrosion inhibitor composition may be employed for treatment using various techniques. In matrix-acidizing treatments, in general, an aqueous acidic fluid can be employed for the acid stimulation. The aqueous acidic fluid may include, but is not limited to, hydrochloric acid, hydrofluoric acid, acetic acid, formic acid, or other organic acids and anhydrides, and mixtures thereof. In addition, these acids may be presented as aqueous acidic solutions comprising water. The aqueous acidic fluid may include any other acids also known to those of skill in the art.

In embodiments, the corrosion inhibitor composition may be employed for inhibiting corrosion on a metal surface. The metal surface may be a steel surface. The steel surface may include carbon steel, alloy steel such as stainless steel, and tool steel. The carbon steel may include low carbon, medium carbon, high carbon, and very high carbon steel as generally defined in the art. The alloy steel may include austenitic steel, ferritic steel, and martensitic steel. The alloy steel may include those with silicon, nickel, titanium, copper, manganese, chromium, and aluminum in varying proportions. The tool steel may include tungsten, molybdenum, cobalt, and vanadium in varying proportions. The metal surface may include other metals or alloys comprising aluminum, steel, stainless steel, brass, bronze, carbon steel, copper, ferrous materials, iron, magnesium, nickel, titanium, or zinc, or a combination thereof. The metal surface can be part of a casing, tubular or process equipment deployed in oilfield applications or other industrial applications.

Without intending to be limited by theory, the corrosion inhibitor composition may be applied or contacted to, or coated on, the metal surface and form a layer or film on the metal surface to prevent or inhibit the acid of the acidizing treatment or other corrosive agents, such as hydrogen sulfide, from corroding the metal surface.

The present disclosure is also directed to methods of forming a treatment fluid by combining or mixing a corrosion inhibitor composition as described herein (which includes one or more 3-HPA-based precursors) with an aqueous acid fluid. The amount of corrosion inhibitor composition combined or mixed with the aqueous acid fluid can be configured to provide protection against or inhibit corrosion. However, it should be understood that the amount of the corrosion inhibitor composition varies depending on the system in which the ingredients are used. For instance, the concentration may depend on the temperature of the well, the exposure time to the treatment fluid, the type of acid, the type of formation, the depth of the formation, the type of surface, etc. Methods for monitoring corrosion are well known in the art thereby allowing one to adjust the concentration of the corrosion inhibitor composition.

The treatment fluid may have utility during acidizing treatments for hydrocarbon wells (e.g., oil and gas wells) as well as non-hydrocarbon wells (such as water wells and geothermal wells). In these applications, the corrosion inhibitor composition may provide corrosion inhibition to equipment including casings, tubing, and other well components such as wellhead fittings, connections, meters, storage tanks, flow lines, etc.

While acidizing treatments and acid stimulation are mentioned, it should be noted that the corrosion inhibitor composition may have other uses. For instance, the corrosion inhibitor composition may have applications relating to the production, transportation, storage, and separation of oil and gas. Additionally, the corrosion inhibitor composition may be employed for other processes such as pickling a tubular, cleaning a wellbore, acid tunneling, drilling mud removal, and scale treatment.

Further, the corrosion inhibitor composition may also be used in other industrial settings to inhibit corrosion of tanks, process lines, pumps, heaters, boilers, cooling towers, and other industrial equipment.

In order to further illustrate the corrosion inhibiting methods and compositions of the present invention, the following examples are given.

### EXAMPLE 1

Example 1 describes the synthesis of 3-HPA, 3-HPA-based precursors and hydrolysis of the 3-HPA-based precursors in the presence of 13% HCl solution at room temperature.

### Synthesis of 3-HPA

3-HPA was synthesized from commercially available 1,2,4-butanetriol in 1,4-dioxane/water as described in G. Burge, A. L. Flourat, B. Pollet, H. E. Spinnler, F. Allais, "3-Hydroxypropionaldehyde (3-HPA) quantification by HPLC using a synthetic acrolein-free 3-hydroxypropionaldehyde system as analytical standard," RSC Adv., 2015, 5, 92619. The yield was 84%. ¹H NMR spectroscopy was used for polymer characterization as follows: (ppm, CDCl₃, 400 MHz) δ =2.75, (td, H2), 3.95 (m, H3), 9.86 (t, H1). The resulting 3-HPA-based precursor includes products of the hydration and oligomerization of 3-hydroxypropion aldehyde in water. The hydration and oligomerization of 3-hydroxypropion aldehyde in water can be catalyzed by acid.

### Synthesis of 3,3-diethoxy-1-propanol (3-HPA-based precursor)

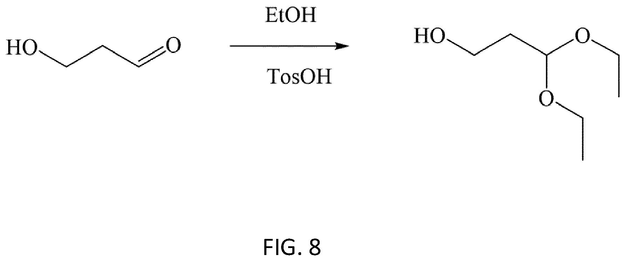

Anhydrous ethanol (2 ml) and anhydrous p-toluenesulfonic acid (TosOH, 30 mg) were added to a solution of 3-HPA (0.5 g) in dichloromethane (3 ml). The reaction mixture was heated at 60°C for 1 hour, neutralized with triethylamine and evaporated. The reaction is illustrated in FIG. 8. The 3-HPA-based precursor includes 3,3-diethoxy-1-propanol that results from the reaction of 3-HPA with alcohol (which is provided by the anhydrous ethanol). The completeness of the reaction was controlled by monitoring the chemical shift of aldehyde proton at 9.65 ppm on NMR spectra. Yield was 67%. In this case, the oligomerization of 3-hydroxypropion aldehyde can be catalyzed by acid.

### Synthesis of polymeric 3-HPA precursor

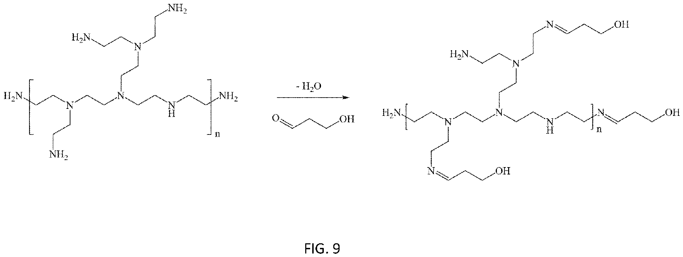

A polymer component that includes poly(ethylenimine)-2000 (0.2 g) was dissolved in 2 ml of methanol and 3-HPA (0.26 g) was added. The mixture was stirred at room temperature for 1 h. The reaction is illustrated in FIG. 9. The resulting 3-HPA-based precursor is a polymeric substance that includes polymeric functional groups (which are derived from the poly(ethylenimine)-2000) combined with 3-HPA that results from the reaction of 3-HPA with a primary aliphatic amine (which are derived from the poly(ethylenimine)-2000). ¹H NMR spectroscopy was used for polymer characterization. Chemical shift at 9.65 ppm assigned to proton in aldehyde group in 3-HPA is completely disappeared in the polymeric 3-HPA-based precursor. Chemical shift at 7.68 ppm is assigned to the proton in the -CH=N- group in the Schiff-base compound.

### Hydrolysis of the 3-HPA-based precursors

The hydrolysis of 3,3-diethoxy-1-propanol 3-HPA-based precursor and the polymeric 3-HPA-based precursor was studied in 13% HCl solution at room temperature in order to gain basic information concerning the stability of the product in acid solution. Both compounds are completely hydrolyzed in 13% HCl solution during <3 min at room temperature. ¹H NMR spectra confirms the formation aldehyde groups at 9.65 ppm and suggests the formation of the 3-HPA-based molecules.

### EXAMPLE 2

Example 2 shows the experimental procedure of corrosion testing and describes the performance results of propargyl alcohol, acrolein, pure freshly synthesized 3-HPA as described in Example 1, and 3,3-diethoxy-1-propanol (3-HPA-based precursor) as described in Example 1.

The corrosion rates were studied by weight loss analysis. The low carbon steel HS80 tubing were cut into coupons of 29±3 cm² surface area using a water cooled band saw to minimize any changes in the properties of the metal that may result from heating. After cutting, the coupons were stamped for identification, glass bead blasted and cleaned in acetone to remove any residue from the machining process. The coupons were then dried, placed in plastic bags and stored in airtight jars to prevent contact with humidity or airborne contaminants. The initial surface area of each test coupon was determined by accurate (to four decimal places) measurement of its geometric dimensions.

In each test, a metal coupon was placed in a 400 ml glass vessel containing 100 ml of preheated 4M HCl and 25% HCl and the appropriate amount of corrosion inhibitor (3.57 mmol) as shown in Table 1. Throughout the exposure period, isothermal conditions are maintained (for the present study, the temperature was maintained at 80°C) and the inhibited acid is continuously stirred using a magnetic stirrer bar. Since the tests were designed to simulate oil well acid stimulation, no effort was made to remove dissolved oxygen from the acid. However, an argon blanket was used to stop any additional intrusion of oxygen during the one hour exposure period. Following each test, the coupons were rinsed in acetone and scrubbed with soap and water to remove residual inhibitor and corrosion deposits. A final rinse in acetone and a brief drying period at ambient temperature was completed prior to re-weighing and calculation of weight loss and corrosion rate. The coupons were examined visually for localized corrosion, observed as pits or edge attack.

Results of the corrosion rates are shown in Table 1. All experiments were conducted at similar corrosion inhibitor dosage (3.57 mmol). These data show that the corrosion behavior of 3-HPA in 4M HCl and 25% HCl is very similar to that of propargyl alcohol and acrolein. No pits were observed on the metal surfaces. The inhibition efficiency of pure 3-HPA was 97% for 28% HCl and 89% for 4M HCl. The corrosion performance of 3-HPA in hydrochloric acid can be further improved by blending with other corrosion inhibitors such as polymerisable inhibitors, chemi-sorbed inhibitor molecules, surfactants and solvents.

**Table 1: Comparison of the corrosion rate (CR) of corrosion inhibitors on HS80 low carbon steel in 100 ml of 4M HCl and 25% HCl at 80°C.**

| Inhibitor | CR, mm/year in 25% HCl | CR, mm/year in 4M HCl |
|---|---|---|
| No inhibitor | 2238±65 | 712±16 |
| Propargyl alcohol, 3.57 mmol | 35±2 | 13±1 |
| Acrolein, 3.57 mmol | 52±3 | 37±2 |
| 3-HPA, 3.57 mmol | 69±4 | 79±4 |
| 3,3-diethoxy-1-propanol (3-HPA-based precursor), 3.57 mmol | 53±3 | 56±3 |

There have been described and illustrated herein several embodiments of the corrosion inhibitor compositions and methods of inhibiting corrosions. While particular embodiments of the invention have been described, it is not intended that the invention be limited thereto, as it is intended that the invention be as broad in scope as the art will allow and that the specification be read likewise. It will therefore be appreciated by those skilled in the art that yet other modifications could be made to the provided invention without deviating from its spirit and scope as claimed.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. **In** the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with an associated function.

## Claims

1. A corrosion inhibiting composition comprising:
a precursor that is a reaction product of 3-hydroxypropion aldehyde and at least one aliphatic component.

2. A corrosion inhibiting composition according to claim 1, wherein:
the at least one aliphatic component is selected from the group consisting of: a primary aliphatic amine, a secondary aliphatic amine, an aliphatic alcohol, an aliphatic diol, and combinations thereof and/or wherein:
the at least one aliphatic component includes an aliphatic alcohol having 1-12 carbon atoms, wherein preferably:
the aliphatic alcohol having 1 to 12 carbon atoms comprises at least one of methanol, ethanol, or combinations thereof, and/or wherein:
the at least one aliphatic component includes an aliphatic diol having 1 to 12 carbon atoms, wherein preferably:
the aliphatic diol having 1-12 carbon atoms comprises ethylene glycol, and/or wherein:
the at least one aliphatic component includes an aliphatic triol having 1 to 12 carbon atoms, wherein preferably:
the aliphatic triol having 1 to 12 carbon atoms comprises glycerol, and/or wherein:
the at least one aliphatic component includes one or more aliphatic primary or secondary amines and/or wherein:
the at least one aliphatic component includes one or more aliphatic primary or secondary diamines and/or triamines and/or wherein:
the at least one aliphatic component includes one or more high-molecular weight components.

3. A corrosion inhibiting composition according to claim 2, wherein
the one or more high-molecular weight components have a molecular weight between 500 and 10⁶ (preferably between 500 and 10000) and comprise backbones that can be either linear or ladder or cyclic or branched.

4. A corrosion inhibiting composition according to claim 3, wherein:
the one or more high-molecular weight components comprise water-soluble polymers and oligomers containing terminal side groups such as hydroxyl, or primary and/or secondary amine groups and/or wherein:
the one or more high-molecular weight components comprise dendrimers containing functional side groups such as hydroxyl, or primary and/or secondary amine groups, wherein preferably:
the dendrimers include at least one of poly(amido amine) (PAMAM), poly(propylene imine) (PPI), or combinations thereof, and/or wherein:
the one or more high-molecular weight components comprise trimers containing functional side groups such as hydroxyl, and amine groups, wherein preferably:
the trimers include at least one of 2-[bis(2-aminoethyl)amino]ethanol, thriethanolamine, or combinations thereof.

5. A method of inhibiting corrosion on a surface, comprising:
contacting the surface with a corrosion inhibiting composition according to any one of the preceding claims.

6. A method of forming a treatment fluid that is transported through a well, the method comprising:
adding the composition of any one of the claims 1 - 4 to an aqueous acidic fluid, wherein preferably:
the composition of any one of the claims 1 - 4 inhibits corrosion of metal surfaces contacted by the treatment fluid.

7. A method of inhibiting corrosion in a well that transports aqueous acidic fluid, wherein the well preferably comprises an oil well, a gas well, a water well, or a geothermal well, the method comprising:
forming or providing a treatment fluid that combines the composition of any one of the claims 1 - 4 and an aqueous acidic fluid; and
introducing the treatment fluid into the well, wherein preferably:
the composition of any one of the claims 1 - 4 inhibits corrosion of metal surfaces contacted by the treatment fluid.

8. A corrosion inhibiting composition comprising:
3-hydroxypropion aldehyde.

9. A corrosion inhibiting composition according to claim 8, further comprising:
products of the hydration and oligomerization of 3-hydroxypropion aldehyde in water.

10. A corrosion inhibiting composition according to claim 8 or 9, wherein:
ogligomerization of 3-hydroxypropion aldehyde is catalyzed by acid.

11. A method of inhibiting corrosion on a surface, comprising:
contacting the surface with a corrosion inhibiting composition according to claim 8, 9 or 10.

12. A method of forming a treatment fluid that is transported through a well, the method comprising:
adding the composition of claim 8, 9 or 10 to an aqueous acidic fluid.

13. A method according to claim 12, wherein:
the composition of claim 8, 9 or 10 inhibits corrosion of metal surfaces contacted by the treatment fluid.

14. A method of inhibiting corrosion in a well that transports aqueous acidic fluid, wherein the well preferably comprises an oil well, a gas well, a water well, or a geothermal well, the method comprising:
forming or providing a treatment fluid that combines the composition of claim 8, 9 or 10 and an aqueous acidic fluid; and
introducing the treatment fluid into the well, wherein preferably:
the composition of claim 8, 9 or 10 inhibits corrosion of metal surfaces contacted by the treatment fluid.
